# NEUE EUROPÄISCHE PATENTSCHRIFT

(11) **EP 2 452 839 B2**
(45) Veröffentlichungstag und Bekanntmachung des Hinweises auf die Entscheidung über den Einspruch: **21.07.2021**
(45) Hinweis auf die Patenterteilung: 06.05.2015
(21) Anmeldenummer: 11189371.5
(22) Anmeldetag: 16.11.2011
(51) Int. Cl.: B60D 1/01, B60D 1/58

(54) **Trägervorrichtung**
Bracket fixture
Dispositif de support

(30) Priorität: 16.11.2010 DE 102010043964
(43) Veröffentlichungstag der Anmeldung: 16.05.2012
(73) Patentinhaber: ACPS Automotive GmbH, 71706 Markgröningen (DE)
(72) Erfinder: Riehle, Jörg, 71679 Asperg (DE); Gentner, Wolfgang, 71711 Steinheim (DE); Wegner, Bert, 73333 Gingen (DE); Wieczorek, Romeo, 73732 Esslingen (DE)
(74) Vertreter: Hoeger, Stellrecht & Partner Patentanwälte mbB

(56) Entgegenhaltungen:
- EP-A2- 1 199 547
- AU-A1- 2008 264 181
- DE-A1- 10 154 733
- US-A- 4 319 766
- US-A1- 2010 076 673

## Beschreibung

Die Erfindung betrifft eine Trägervorrichtung für Kraftfahrzeuge, welche zur Aufnahme von Lasten ausgebildet ist, welche mindestens an einem ersten Montageort mit einem ersten Sensor und an einem zweiten Montageort mit einem zweiten Sensor versehen ist.

Bei derartigen Trägervorrichtungen besteht das Problem, die aufgenommenen Lasten zu erfassen, um damit beispielsweise einem Fahrer anzeigen zu können, ob die Lasten zu groß oder zu klein (d.h. negativ) sind oder noch in einem tolerablen Bereich liegen.

Die US 2010/0076673 A1 offenbart ein Lastmesssystem für Anhängekupplungen, bei welchen die zwischen Zugfahrzeug und Anhänger angeordnete Anhängekupplung mit einem oder mehreren Sensoren versehen sein soll, um zu erfassen, ob die Zuglast überschritten wird.

Der Erfindung liegt daher die Aufgabe zugrunde, eine Trägervorrichtung für Kraftfahrzeuge der eingangs beschriebenen Art dahingehend zu verbessern, dass die auf diese einwirkenden Lasten erfasst werden können.

Diese Aufgabe wird bei einer Trägervorrichtung der eingangs beschriebenen Art erfindungsgemäß durch die Merkmale des Anspruchs 1 gelöst.

Der Vorteil der erfindungsgemäßen Lösung ist darin zu sehen, dass mit dieser eine einfache Möglichkeit geschaffen wurde, die aufgenommene Last zu erfassen, ohne dass ein großer apparativer Aufwand getrieben werden muss.

Ferner ist erfindungsgemäß eine einfache Art der Auswertung vorgesehen.

Um den Abschnitt der Trägervorrichtung zwischen dem ersten Montageort und dem zweiten Montageort zuverlässig für die Ermittlung der aufgenommenen Last einsetzen zu können, ist vorzugsweise vorgesehen, dass der Abschnitt der Trägervorrichtung ein einstückiger Abschnitt ist.

Eine andere vorteilhafte Lösung sieht vor, dass der Abschnitt der Trägervorrichtung durch spielfreie Verbindungen miteinander verbundene Teile umfasst.

Derartige spielfrei verbundene Teile können beispielsweise durch Formschluss oder Kraftschluss miteinander verbundene Teile sein, wobei die Verbindung spielfrei gestaltet werden muss.

Das heißt, es kommen keine Teile der Trägervorrichtung in Frage, die durch eine lösbare oder eine bewegliche Verbindung miteinander verbunden sind, selbst wenn diese lösbare oder die bewegliche Verbindung durch eine Fixiereinrichtung fixierbar ist, da eine derartige Fixiereinrichtung immer noch ein geringgradiges und insbesondere über lange Zeit nicht definierbares Spiel aufweist.

Besonders vorteilhaft ist es, wenn die spielfreien Verbindungen stoffschlüssige Verbindungen sind.

Derartige stoffschlüssige Verbindungen sind beispielsweise Klebeverbindungen, Löt- oder Schweißverbindungen.

Um die lastbedingten Deformationen richtungsselektiv erfassen zu können, ist vorzugsweise vorgesehen, dass die lastbedingten Deformationen in Bezug auf zueinander im Wesentlichen parallele Erfassungsebenen der Sensoren erfasst werden.

Durch die Tatsache, dass im Wesentlichen parallele Erfassungsebenen eingesetzt werden, ist sichergestellt, dass nur in diesen Ebenen erfolgende lastbedingte Bewegungen durch die lastbedingten Deformationen erfasst werden, so dass sich die lastbedingten Deformationen richtungsselektiv auswerten lassen.

Unter im Wesentlichen parallelen Erfassungsebenen sind dabei Erfassungsebenen zu verstehen, die entweder parallel zueinander verlaufen oder miteinander einen Winkel von maximal plus/minus 10° einschließen, da derartige geringe Winkel zwischen den Erfassungsebenen sich auf die Ergebnisse geringgradig auswirken.

Die Erfassungsebenen könnten theoretisch beliebig gewählt sein.

Besonders vorteilhaft ist es jedoch, wenn die Erfassungsebenen im Wesentlichen parallel zu durch einen Aufbau der Sensoren vorgegebenen Messrichtungen der Sensoren verlaufen, insbesondere zu im Wesentlichen parallel zu von jeweils zwei Messrichtungen der Sensoren aufgespannten Ebenen.

Auch in diesem Fall ist unter dem im Wesentlichen parallelen Verlauf der Erfassungsebene relativ zu der von den Messrichtungen aufgespannten jeweiligen Ebene entweder ein paralleler Verlauf oder ein Verlauf in einem Winkel von maximal plus/minus 10° zu verstehen.

Darüber hinaus ist vorzugsweise vorgesehen, dass die Projektion der in der einen Erfassungsebene liegenden Messrichtungen von einem der Sensoren auf die andere Erfassungsebene des anderen der Sensoren ebenfalls einen im Wesentlichen parallelen Verlauf der Messrichtungen zueinander ergibt, das heißt, dass die Messrichtungen in der jeweiligen Ebene auch maximal einen Winkel von plus/minus 10° miteinander einschließen oder parallel zueinander verlaufen.

Hinsichtlich der Auswertung der Messwerte in der Auswerteeinheit wurden bislang keine näheren Angaben gemacht.

So sind die unterschiedlichsten Lösungen denkbar.

Beispielsweise ist es denkbar, für die Messwerte des ersten und des zweiten Sensors Wertetabellen vorzugeben, aus denen sich die aufgenommene Last bei den verschiedenen Messwerten der Sensoren ermitteln lässt.

Auch ein derartiger Vergleich könnte durch Vergleich der lastbehafteten Differenzwerte mit lastfreien Differenzwerten erfolgen, die in Wertetabellen niedergelegt werden.

Eine besonders günstige Lösung sieht jedoch vor, dass die Auswerteeinheit aus der Abweichung der lastbehafteten Differenzwerte von einem lastfreien Differenzwert ein Maß für die aufgenommene Last ermittelt.

Hinsichtlich der Ausbildung der Sensoren sind die unterschiedlichsten Lösungen denkbar.

Beispielsweise könnten die Sensoren so ausgebildet sein, dass sie eine relative Bewegung zueinander erfassen.

Die erfindungsgemäße Lösung sieht vor, dass der erste und der zweite Sensor Neigungssensoren sind.

Derartige Neigungssensoren könnten als spezielle Neigungssensoren aufgebaut und ausgebildet sein.

Eine besonders vorteilhafte Lösung sieht jedoch vor, dass der erste Sensor und der zweite Sensor als Neigungssensoren betreibbare Beschleunigungssensoren sind.

Derartige Beschleunigungssensoren, die sich auch als Neigungssensoren betreiben lassen, haben den großen Vorteil, dass sie die Möglichkeit eröffnen, nicht nur Neigungen zu erfassen, sondern auch gleichzeitig oder zeitlich versetzt die Erfassung von Beschleunigungen zulassen.

Vorzugsweise sind Sensoren, die als Neigungssensoren arbeiten, so ausgebildet, dass sie Neigungen um mindestens eine Neigungsachse erfassen.

Besonders günstig ist es, wenn die Sensoren Neigungswerte in Bezug auf eine Schwerkraftrichtung als Referenz erfassen, so dass die Möglichkeit besteht, relativ zur Schwerkraftrichtung die Neigung in unterschiedlichen Richtungen zu erfassen.

Insbesondere ist bei der erfindungsgemäßen Lösung in diesem Fall vorgesehen, dass die lastbedingten Deformationen durch Neigungsdifferenzwerte erfasst werden, die aus als Messwerte erfassten Neigungswerten der Sensoren gebildet werden.

Insbesondere lässt sich in diesem Fall die Abweichung des stützlastbedingten Neigungsdifferenzwertes der Sensoren von einem stützlastfreien Neigungsdifferenzwert von der Auswerteeinheit ermitteln.

Beispielsweise sind dabei die Sensoren so ausgerichtet, dass mit dem ersten Sensor und dem zweiten Sensor ein Neigungswert um im Wesentlichen parallel zueinander verlaufenden Neigungsachsen erfassbar ist.

Besonders vorteilhaft ist es, wenn die Auswerteeinheit eine Neigungsdifferenz zwischen einer Neigung des ersten Sensors um eine erste Neigungsachse und einer Neigung des zweiten Sensors um eine zweite Neigungsachse erfasst, und wenn die Neigungsachsen im Wesentlichen senkrecht zu einer Fahrzeuglängsmittelebene verlaufen.

Unter einer Fahrzeuglängsmittelebene ist dabei eine durch die Mitte des Fahrzeugs und in Längsrichtung sowie vertikal verlaufende Ebene zu verstehen.

Ferner ist unter einem im Wesentlichen senkrechten Verlauf der Neigungsachsen zu der Fahrzeuglängsmittelebene zu verstehen, dass die Neigungsachsen mit der Fahrzeuglängsmittelebene mindestens einen Winkel von 80° einschließen.

Die Neigungsachsen, um welche eine Neigung ermittelt werden kann, verlaufen dabei vorzugsweise senkrecht zu Neigungserfassungsebenen, die durch mindestens zwei Messachsen der Sensoren aufgespannt werden, wobei vorzugsweise die Sensoren so ausgerichtet sind, dass die jeweilige Neigungserfassungsebenen derselben maximal einen Winkel von plus/minus 10° miteinander einschließen, vorzugsweise parallel zueinander ausgerichtet sind.

Im Zusammenhang mit der bisherigen Erläuterung der einzelnen Ausführungsbeispiele wurde nicht näher darauf eingegangen, wie die Auswerteeinheit den stützlastfreien Neigungsdifferenzwert ermitteln soll.

Vorzugsweise ist dabei vorgesehen, dass die Auswerteeinheit den lastfreien Neigungsdifferenzwert im Rahmen einer Referenzwertmessung ermittelt.

Eine Referenzmessung kann zum Beispiel manuell durch Betätigen einer Taste ausgelöst werden.

Eine derartige Referenzmessung kann durch bestimmte Betriebszustände des Kraftfahrzeugs, beispielsweise ein Verbringen der Anhängekupplung in ihre Arbeitsstellung d.h. zum Beispiel Montieren in der Arbeitsstellung oder Bewegen von einer Ruhestellung in die Arbeitsstellung) ausgelöst werden, oder im Fall einer vorhandenen Anhängeerkennung auch durch ein Aufschließen desselben und/oder ein Starten des Motors, wenn die Anhängererkennung keinen Anhänger erkennt.

Ferner ist vorzugsweise vorgesehen, dass die Auswerteeinheit den lastbedingten Neigungsdifferenzwert bei nichtfahrendem Kraftfahrzeug ermittelt, so dass die Fahrzeugdynamik sich nicht auf den stützlastbedingten Neigungsdifferenzwert auswirken kann.

Unter einem nichtfahrenden Fahrzeug ist dabei ein stillstehendes und/oder ein Fahrzeug zu verstehen, das sich mit weniger als 5 km/h bewegt.

Um bei der Auswerteeinheit die Möglichkeit zu eröffnen, dass diese den Wert für die Last auch auswerten kann, ist vorzugsweise vorgesehen, dass die Auswerteeinheit die Zulässigkeit der Last durch Vergleich mit einem in der Auswerteeinheit vorgegebenen Referenzwert, der beispielsweise abgespeichert ist auswertet, um durch eines oder mehrere Signale die Zulässigkeit anderen Einheiten zu übermitteln.

Beispielsweise ist die Auswerteeinheit mit einer Anzeigeeinheit gekoppelt, welche die Zulässigkeit oder Nichtzulässigkeit der Last, beispielsweise durch farbige Leuchtsignale, oder einen Anzeigebalken mit steuerbarer variabler Farbgebung anzeigt.

Darüber hinaus schafft die erfindungsgemäße Lösung aber auch die Möglichkeit, dass die Auswerteeinheit mit mindestens einem der Sensoren Beschleunigungen erfasst.

Noch vorteilhafter ist es, wenn die Auswerteeinheit mit beiden Sensoren Beschleunigungen erfasst.

Die Erfassung von Beschleunigungen mit dem ersten und zweiten Sensor eröffnet die Möglichkeit, auch dynamische Kräfte, das heißt also im Fahrbetrieb des Fahrzeugs auftretende Kräfte zu erfassen.

Dabei besteht mit der erfindungsgemäßen Lösung beispielsweise die Möglichkeit, dass die Auswerteeinheit Beschleunigungen quer zu einer Fahrzeuglängsmittelebene erfasst.

Es besteht aber auch die Möglichkeit, Beschleunigungen in der Fahrzeuglängsmittelebene zu erfassen, dies können insbesondere in horizontaler Richtung wirkende Beschleunigungen sein und/oder in vertikaler Richtung wirkende Beschleunigungen sein.

Die Beschleunigungsmessungen können dabei als unmittelbare Beschleunigungsmessungen mit den beiden Sensoren durchgeführt werden.

Alternativ ist es aber auch günstig, um Drifteffekte auszuschließen, wenn die Beschleunigungsmessungen als Differenzmessungen ausgeführt werden.

Mit derartigen Beschleunigungsmessungen besteht die Möglichkeit, die Fahrdynamik beeinflussenden Einheiten des Kraftfahrzeugs die auf die Trägervorrichtung einwirkenden Beschleunigungen zu melden, um diese bei der Steuerung dieser Einheiten zur Verbesserung der Fahrdynamik zu berücksichtigen.

Im Zusammenhang mit der bisherigen Erläuterung der einzelnen Ausführungsbeispiele wurde nicht näher darauf eingegangen, wie die Trägervorrichtung selbst ausgebildet sein soll.

Es besteht beispielsweise die Möglichkeit, als Trägervorrichtung einen Dachlastenträger vorzusehen.

Ein anderes Ausführungsbeispiel sieht vor, dass die Trägervorrichtung einen heckseitig an der Karosserie angeordneten Karosserieverbindungsträger und ein von Karosserieverbindungsträger gehaltenes Stützlastaufnahmeelement umfasst.

Ein derartiger Karosserieverbindungsträger kann beispielsweise ein Querträger mit Seitenträgern sein, der heckseitig der Karosserie montierbar ist, wobei der Querträger beispielsweise von einem Stoßfänger abgedeckt ist und die Seitenträger in einem unteren Bereich der Karosserie verlaufen und mit dieser verbunden sind.

Das Stützlastaufnahmeelement kann ebenfalls in unterschiedlichster Art und Weise ausgebildet sein.

Beispielsweise ist das Stützlastaufnahmeelement als Kugelhals mit einer Kupplungsvorrichtung, beispielsweise mit einer Kupplungskugel, ausgebildet, an welche ein Anhänger angehängt werden kann, um diesen Anhänger mit dem Kraftfahrzeug zu ziehen.

Eine andere vorteilhafte Lösung sieht vor, dass das Stützlastaufnahmeelement beispielsweise als Hecklastenträger ausgebildet ist, welcher dazu dient, heckseitig Zusatzlasten mit dem Kraftfahrzeug zu transportieren.

Ein derartiger Hecklastenträger kann beispielsweise ein Heckgepäckträger oder ein Heckaggregateträger oder auch ein Heckfahrradträger sein.

Hinsichtlich der Anordnung der Montageorte für den ersten und den zweiten Sensor wurden bei der Ausbildung der Trägervorrichtung aus einem Karosserieverbindungsträger und einem Stützlastaufnahmeelement keine näheren Angaben gemacht.

Eine vorteilhafte Lösung sieht vor, dass der erste und der zweite Montageort an dem Karosserieverbindungsträger angeordnet sind.

Alternativ oder ergänzend hierzu ist vorgesehen, dass der erste und der zweite Montageort an dem Stützlastaufnahmeelement angeordnet sind.

Insbesondere ist dabei nicht vorgesehen, dass der erste Montageort am Karosserieverbindungsträger vorgesehen ist und der zweite Montageort am Stützlastaufnahmeelement, wenn diese lösbar oder bewegbar miteinander verbunden werden sollen, da durch diese Verbindung ein nicht definiertes Spiel zwischen den beiden auftreten kann, das die Messungen verfälschen würde.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise aufgebrochene Seitenansicht eines Heckbereichs eines Kraftfahrzeugs mit einem ersten Ausführungsbeispiel einer erfindungsgemäßen Trägervorrichtung, ausgebildet als Anhängekupplung;
- Fig. 2: eine perspektivische Darstellung eines ersten Ausführungsbeispiels einer erfindungsgemäßen Trägervorrichtung;
- Fig. 3: eine vergrößerte Darstellung des Stützlastaufnahmeelements beim ersten Ausführungsbeispiel der erfindungsgemäßen Anhängekupplung;
- Fig. 4: ein Blockdiagram einer Auswerteeinheit des ersten Ausführungsbeispiels der erfindungsgemäßen Trägervorrichtung;
- Fig. 5: eine schematische Darstellung eines Sensors mit den Messrichtungen zum Einsatz bei dem ersten Ausführungsbeispiel;
- Fig. 6: eine perspektivische Darstellung ähnlich Fig. 2 eines zweiten Ausführungsbeispiels einer erfindungsgemäßen Trägervorrichtung;
- Fig. 7: ein Stützlastaufnahmeelement eines dritten Ausführungsbeispiels einer erfindungsgemäßen Trägervorrichtung;
- Fig. 8: eine perspektivische Darstellung ähnlich Fig. 2 eines vierten Ausführungsbeispiels einer erfindungsgemäßen Trägervorrichtung ausgebildet als Anhängekupplung mit einem bewegbaren Kugelhals;

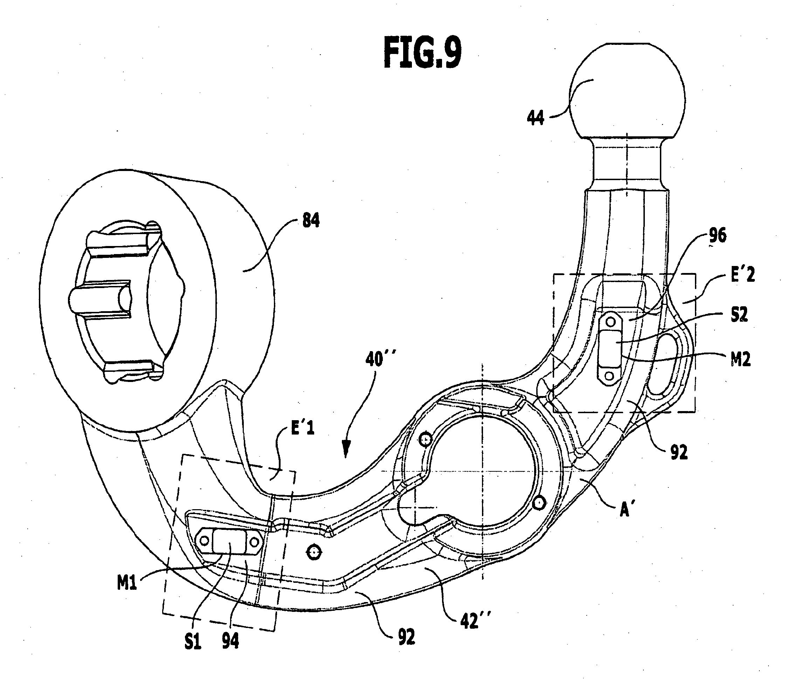

- Fig. 9: eine vergrößerte Darstellung des Stützlastaufnahmeelements beim dritten Ausführungsbeispiel;
- Fig. 10: eine perspektivische Darstellung eines fünften Ausführungsbeispiels einer erfindungsgemäßen Trägervorrichtung mit Darstellung des Karosserieverbindungsträgers ohne das Stützlastaufnahmeelement;
- Fig. 11: eine perspektivische Darstellung des Stützlastaufnahmeelements des fünften Ausführungsbeispiels der erfindungsgemäßen Trägervorrichtung;
- Fig. 12: eine perspektivische Darstellung ähnlich Fig. 10 eines sechsten Ausführungsbeispiels einer erfindungsgemäßen Trägervorrichtung;
- Fig. 13: eine perspektivische Darstellung ähnlich Fig. 10 eines siebten Ausführungsbeispiels einer erfindungsgemäßen Trägervorrichtung;
- Fig. 14: eine perspektivische Darstellung eines Stützlastaufnahmeelements eines achten Ausführungsbeispiels einer erfindungsgemäßen Trägervorrichtung;
- Fig. 15: eine Darstellung eines Stützlastaufnahmeelements eines neunten Ausführungsbeispiels einer erfindungsgemäßen Trägervorrichtung;
- Fig. 16: eine Darstellung ähnlich Fig. 14 eines Stützlastaufnahmeelements eines zehnten Ausführungsbeispiels einer erfindungsgemäßen Trägervorrichtung;
- Fig. 17: eine perspektivische Darstellung eines Stützlastaufnahmeelements ähnlich Fig. 14 eines elften Ausführungsbeispiels einer erfindungsgemäßen Trägervorrichtung und
- Fig. 18: eine perspektivische Darstellung eines zwölften Ausführungsbeispiels einer erfindungsgemäßen Trägervorrichtung.

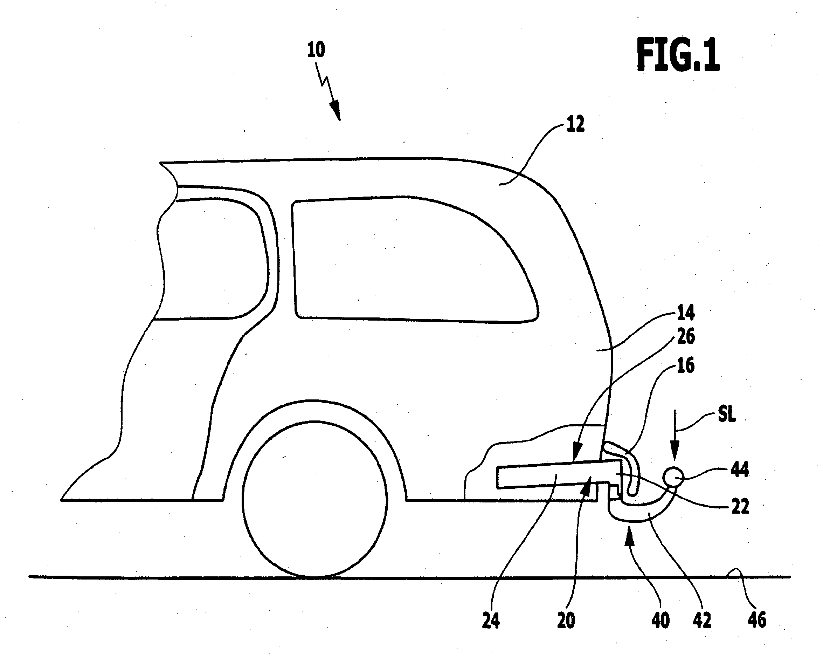

Ein in Fig. 1 als Ganzes mit 10 bezeichnetes Kraftfahrzeug umfasst eine Fahrzeugkarosserie 12, an welcher in einem Heckbereich 14 eine erfindungsgemäße Trägervorrichtung 20 montiert ist, welche einen von einer Stoßfängereinheit 16 abgedeckten Querträger 22 sowie sich in Längsrichtung der Karosserie entlang von Karosseriewandabschnitten erstreckende und an diesen fixierte Seitenträger 24 aufweist, die zusammen mit dem Querträger einen Karosserieverbindungsträger 26 bilden, welcher teilweise durch die Fahrzeugkarosserie 12 und zum Teil durch die Stoßfängereinheit 16 abgedeckt ist.

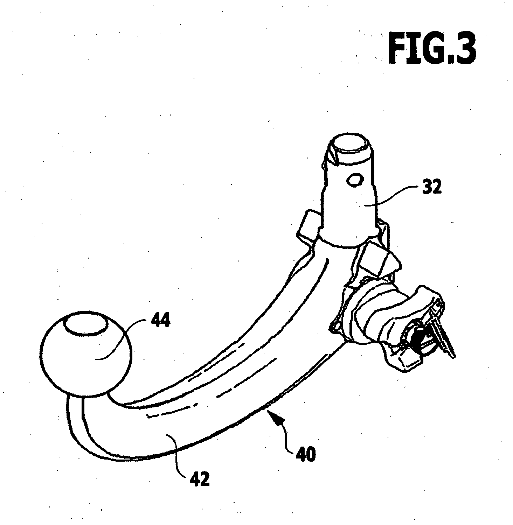

An dem Karosserieverbindungsträger 26 ist eine als Ganzes mit 30 bezeichnete Aufnahme für ein in Fig. 3 vergrößert dargestelltes Halteelement 32 eines als Ganzes mit 40 bezeichneten Stützlastaufnahmeelements vorgesehen, welches in diesem Fall als Kugelhals 42 ausgebildet ist, der einerseits das Halteelement 32 trägt und andererseits mit einer Kupplungskugel 44 versehen ist.

Im Falle des Kugelhalses 42 als Stützlastaufnahmeelement 40 wirken auf die Kupplungskugel 44, welcher zur Verbindung mit einem Fahrzeuganhänger oder zur Aufnahme eines Hecklastenträgers dient, zumindest die folgenden Kräfte.

Im statischen Fall, das heißt bei stehendem Fahrzeug, wirkt auf die Kupplungskugel 44 eine der Stützlast entsprechende Kraft SL, welche vorzugsweise in vertikaler Richtung quer zu einer Fahrbahn 46 gerichtet ist und in Schwerkraftrichtung oder entgegengesetzt zur Schwerkraftrichtung auf die Kupplungskugel 44 einwirken kann.

Die Stützlast stellt dabei ein Maß dafür dar, wie stark ein Anhänger auf die Kupplungskugel 44 drückt oder wie schwer ein an der Kupplungskugel 44 angreifender Hecklastenträger des Kraftfahrzeugs ist.

Zusätzlich wirkt im Fahrbetrieb des Kraftfahrzeugs eine in einer Fahrzeuglängsmittelebene FL liegende vertikale Kraft Vo von oben und/oder eine in der Fahrzeuglängsmittelebene FL liegende vertikale Kraft Vu von unten, je nach dem, in welchem fahrdynamischen Zustand sich das Kraftfahrzeug 10 und ein an dieses angehängter Anhänger oder ein an diesem montierter Hecklastenträger befinden.

Gleichzeitig wirken auf die Kupplungskugel 44 eine im Wesentlichen horizontal auf diese einwirkende Querkraft Ql von links und/oder eine dazu gegebenenfalls entgegengesetzte Querkraft Qr von rechts wobei diese Querkräfte Ql und Qr vorzugsweise senkrecht auf der Fahrzeuglängsmittelebene FL stehen. Ferner wirken auf die Kupplungskugel 44 noch eine horizontal ausgerichtete Längskraft Lv nach vorne und/oder eine horizontal ausgerichtete Längskraft Lr nach hinten, wobei die Längskräfte Lv und Lr in der Fahrzeuglängsmittelebene FL liegen, in gleicher Weise wie die vertikale Kraft von oben Vo und die vertikale Kraft von unten Vu.

Die erfindungsgemäße Aufgabe, nämlich die Fahrzustände des Kraftfahrzeugs 10 sicherer zu gestalten und gegebenenfalls unsichere Fahrzustände zu verhindern, wird bei der erfindungsgemäßen Trägervorrichtung 20 dadurch gelöst, dass eine oder mehrere der Kräfte SL, Ql, Qr, Vo, Vu, Lv und Lr durch eine am Fahrzeug vorgesehene Auswerteeinheit 50 erfasst und beispielsweise unter Zuhilfenahme von Schwellwerten ausgewertet werden.

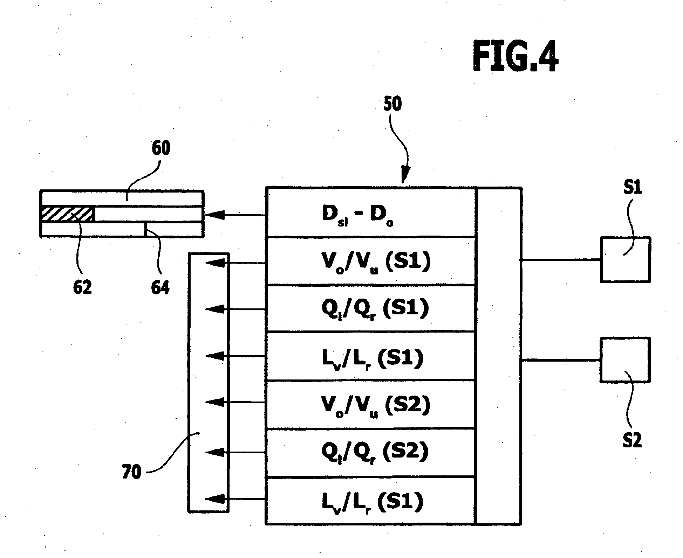

Die Auswerteeinheit 50 ermittelt dann ihrerseits im Zuge der Auswertung, ob Informationssignale für den Betreiber des Kraftfahrzeugs oder für eine Fahrzustandssteuerung des Kraftfahrzeugs ausgegeben werden (Fig. 4).

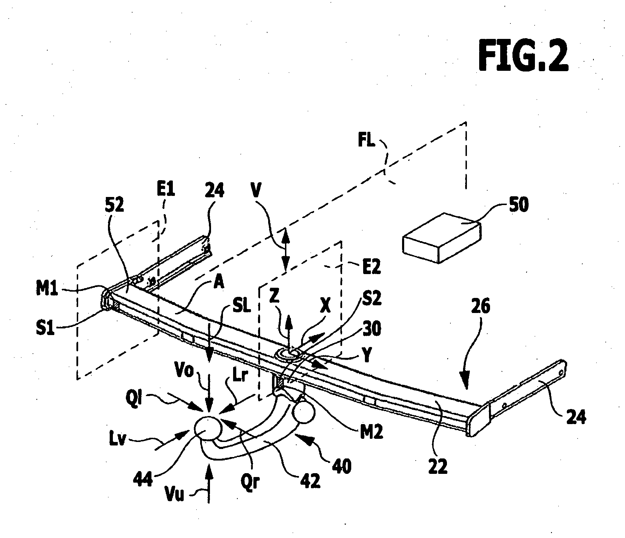

Die Erfassung der vorstehend genannten Kräfte durch die Auswerteeinheit 50 erfolgt, wie beispielsweise in Fig. 2 dargestellt, durch zwei Sensoren S1 und S2, die an Montageorten M1 bzw. M2 im Abstand voneinander an der erfindungsgemäßen Trägervorrichtung 20 angeordnet sind.

Beispielsweise ist bei dem in Fig. 2 dargestellten Ausführungsbeispiel der Sensor S1 an einem äußeren, mit dem jeweiligen Längsträger 24 verbundenen Ende 52 am Querträger 22 am Montageort M1 angeordnet und der Sensor S2 ist an der Aufnahme 30 am Montageort M2 angeordnet.

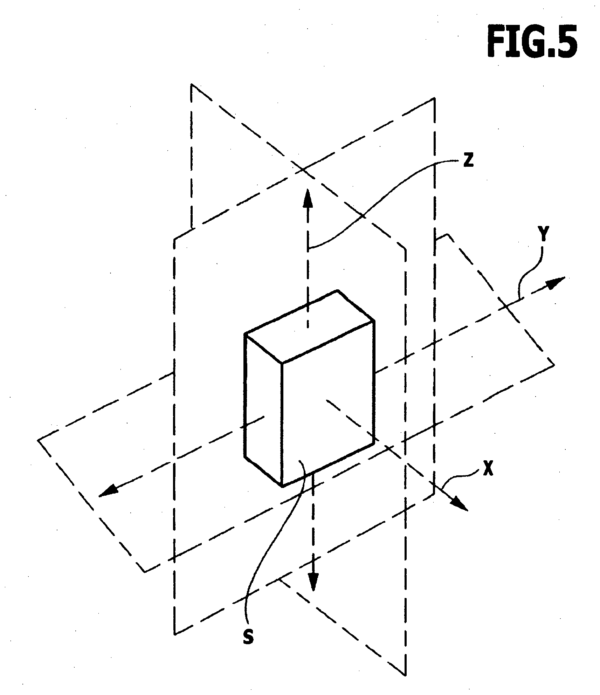

Jeder der Sensoren S1 und S2 ist ein in MEMS Technologie aufgebautes mikroelektromechanisches System, das beispielsweise sowohl als Beschleunigungssensor als auch als Neigungssensor eingesetzt werden kann. Wie in Fig. 5 dargestellt, ist ein derartiger Sensor S als ungefähr quaderförmiger Block ausgebildet und in der Lage, in einer Raumrichtung und/oder in zwei Raumrichtungen und/oder in drei Raumrichtungen, beispielsweise den Raumrichtungen X, Y und Z, Beschleunigungen zu messen und darüber hinaus in der Lage, in der XZ-Ebene Neigungen um die Y-Achse als Drehachse und in der YZ-Ebene Neigungen um die X-Achse als Drehachse zu erfassen, wenn man davon ausgeht, dass die Z-Achse den kleinsten Winkel mit einer Vertikalen V einschließt, also ungefähr parallel zu dieser verläuft.

Bei dem ersten, in Fig. 2 dargestellten Ausführungsbeispiel sind die Sensoren S1 und S2 so angeordnet, dass sie mindestens in den Neigungserfassungsebenen E1 und E2, dies sind beispielsweise die XZ-Ebenen gemäß Fig. 5, Neigungen um die Y-Achse als Neigungsachse erfassen, wobei die Ebenen E1 und E2 zueinander vorzugsweise parallel, maximal in einem Winkel von +/-10° verlaufen. Bei dem ersten Ausführungsbeispiel sind die Ebenen E1 und E2 so ausgerichtet, dass die jeweiligen Y-Achsen quer zur Fahrzeuglängsmittelebene FL, vorzugsweise im Wesentlichen senkrecht zur Fahrzeuglängsmittelebene FL verlaufen, wobei unter einem im Wesentlichen senkrechten Verlauf zu verstehen ist, dass der kleinste Winkel zwischen der jeweiligen Y-Achse und der Fahrzeuglängsmittelebene FL größer als 80° ist.

Es ist aber auch denkbar, dass die Ebenen E1 und E2 in einem Winkel im Bereich zwischen beispielsweise 20° und 60° verlaufen, wobei die Ausrichtung der Ebenen E1 und E2 zweckmäßigerweise abhängig von dem Verlauf der Deformation des Abschnitts A erfolgt, nämlich so, dass die Deformation in den Ebenen E1 und E2 zu einer größtmöglichen Neigungsdifferenz bei Auftreten der Kraft SL führt.

Ferner sind die Sensoren S1 und S2 mit ihren X-Achsen und Z-Achsen, die jeweils in den Neigungserfassungsebenen E1 und E2 liegen, so relativ zueinander ausgerichtet, dass eine Projektion der X-und der Z-Achse des einen Sensors S1, S2 auf die Ebene E2, E1 des jeweils anderen Sensors S2, S1 einen Winkel zwischen der X- bzw. Z-Achse von weniger als 10° ergibt, wobei vorzugsweise die jeweiligen Projektionen der X-Achsen und Z-Achsen in den jeweiligen Neigungserfassungsebenen E2, E1 parallel zu den in diesen Neigungserfassungsebenen E2, E1 liegenden X-Achsen und Z-Achsen verlaufen.

Die Neigungen zur Z-Achse lassen sich mit einem einachsigen Beschleunigungssensor erfassen, dessen eine Messachse parallel zu den Neigungserfassungsebenen E1, E2 verläuft.

Erfolgt nun eine Belastung der Kupplungskugel 44 mit einer der Stützlast entsprechenden Kraft SL so wird diese Kraft SL durch das Stützlastaufnahmeelement 40 auf den Karosserieverbindungsträger 26 übertragen, wobei diese Kraft SL in dem Karosserieverbindungsträger 26 aufgrund der Materialelastizitäten zu stützlastbedingten Deformationen führt, insbesondere zu einer bezogen auf die Y-Achse torsionsartigen Deformation des Abschnitts A zwischen dem Montageort M1 des Sensors S1 und dem Montageort M2 des Sensors S2, wobei der Abschnitt A durch den jeweiligen Abschnitt des Querträgers 22 und einen Teil der Aufnahme 30 gebildet ist.

Die Gesamtdeformation in diesem Abschnitt A führt dabei dazu, dass ein Differenzwert Dₒ der zwischen den Sensoren S1 und S2 festgestellten Neigungswerten N1 bzw. N2 in den Neigungserfassungsebenen E1 und E2 vor dem Aufbringen der der Stützlast entsprechenden Kraft SL auf die Kupplungskugel 44 vom Differenzwert Dₛₗ der Neigungswerte N1 bzw. N2 nach Einwirken der der Stützlast entsprechenden Kraft SL auf die Kupplungskugel 44 abweicht.

Diese Abweichung zwischen den Differenzwerten Dₒ und Dₛₗ ermöglicht es, die durch die der Stützlast entsprechende Kraft SL bedingte Deformation des Abschnitts A zu erfassen und diese Deformation ist in erster Näherung abhängig von, vorzugsweise näherungsweise proportional zu, der Stützlast auf die Kupplungskugel 44.

Die Abweichung des Differenzwertes Dₛₗ, der nach dem Einwirken der der Stützlast entsprechenden Kraft SL auf die Kupplungskugel 44 erfasst wird, von dem Differenzwert Dₒ, der vor Einwirken der der Stützlast entsprechenden Kraft SL auf die Kupplungskugel 44 erfasst wird, beispielsweise im Rahmen einer Referenzmessung beim Verbringen der Anhängekupplung in die Arbeitsstellung, kann somit von der Auswerteeinheit 50 als Maß für die Stützlast oder die Kraft SL herangezogen werden und bei geeigneter Kalibrierung kann die Auswerteeinheit 50 entweder den Wert der Stützlast oder der Kraft SL selbst anzeigen und/oder anzeigen, ob die Stützlast oder die entsprechende Kraft SL in einem für dieses Kraftfahrzeug 10 tolerablen Wertebereich liegt oder außerhalb eines für dieses Kraftfahrzeug 10 tolerablen Wertebereichs.

Beispielsweise ist der Auswerteeinheit 50 eine Anzeigeeinheit 60 zugeordnet, welche in Form eines Balkens 62 den Wert für die der Stützlast entsprechende Kraft SL anzeigt, wobei der die Stützlast oder die Kraft SL anzeigende Balken 62 parallel zu einem Skalenfeld 64 verläuft, das entweder zwischen einem tolerablen Bereich und einem nicht tolerablen Bereich oder zwischen mehreren abgestuften Bereichen der Tolerabilität differenziert oder gegebenenfalls sogar eine Skala aufweist, auf welcher die Werte für die Stützlast SL ablesbar sind.

Die Sensoren S1 und S2 können zusätzlich auch noch als Beschleunigungssensoren arbeiten und beispielsweise im dynamischen Fall, das heißt bei fahrendem Kraftfahrzeug 10 durch die Kräfte Vo oder Vu, Ql oder Qr oder Lv oder Lr hervorgerufene Beschleunigungen zum Teil oder in Gänze erfassen, je nach dem in wie viel Achsen Beschleunigungen erfassbar sind, wobei entweder beide Sensoren S1 und S2 dieselben Beschleunigungen erfahren oder gegebenenfalls unterschiedliche Beschleunigungen, beispielsweise hervorgerufen durch noch zusätzlich erfolgende Deformationen des Abschnitts A des Karosserieverbindungsträgers 26.

Beispielsweise können im Fall von dynamisch einwirkenden Kräften Vo oder Vu die Beschleunigungen, die vom Sensor S2 in diesen Richtungen gemessen werden, größer sein als die Beschleunigungen, die vom Sensor S1 gemessen werden, da der Abschnitt A des Karosserieverbindungsträgers 26 in diesen Richtungen eine relativ große Elastizität und somit Deformation aufweisen kann, während beispielsweise die Querkräfte Ql oder Qr im Wesentlichen identische Beschleunigungen bei den Sensoren S1 und S2 erzeugen, da in diesen Richtungen der Abschnitt A geringe Elastizität und somit eine geringe Deformation aufweist.

Auch in Richtung der Kräfte Lv und Lr können die Beschleunigungen, die mit dem Sensor S2 gemessen werden, größer sein als die Beschleunigung, wie sie mit dem Sensor S1 gemessen werden, da auch in diesen Richtungen der Abschnitt A eine Elastizität aufweist, die zu einer Deformation des Karosserieverbindungsträgers 26 im Bereich des Abschnitts A führen.

Aufgrund der von den Sensoren S1 und S2 gemessenen Beschleunigungen können die diesen Beschleunigungen entsprechenden Kräfte von der Auswerteeinheit 50 bestimmt und ausgegeben werden, beispielsweise an eine Einheit 70, welche eine dynamische Beanspruchung der Trägervorrichtung 20 erfasst und beispielsweise diese in Bezug auf eine Zeitachse aufzeichnet und/oder über einen Zeitraum mittelt und/oder zur Beeinflussung von Fahrdynamikregelungen des Kraftfahrzeugs an diese weiter übermittelt.

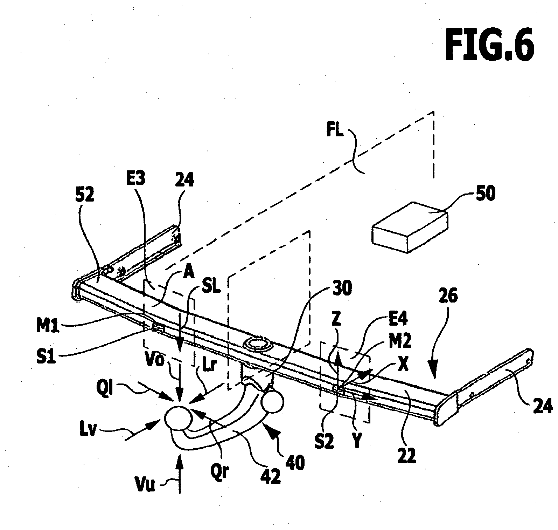

Im Gegensatz zum ersten Ausführungsbeispiel sind bei einem zweiten Ausführungsbeispiel, dargestellt in Fig. 6, die Sensoren S1 und S2 in gleichen Abständen von den Seitenträgern 24 angeordnet und so ausgerichtet, dass sie Neigungen um die X-Achse, also in den YZ-Ebenen erfassen, so dass die Neigungserfassungsebenen E3 und E4 quer, vorzugsweise senkrecht zur Fahrzeuglängsmittelebene FL verlaufen, wobei die Z-Richtung zumindest den kleinsten Winkel mit der Vertikalen V einschließt, vorzugsweise ungefähr parallel zur Vertikalen V ausgerichtet ist.

Die Sensoren S1 und S2 erfassen bei einer derartigen Anordnung die Durchbiegung des Abschnitts des Querträgers 22 zwischen den Montagearten M1 und M2 nach unten, die bei der Kraft SL auf den Kugelkopf 44 eintritt.

Bei zunehmender Kraft SL nimmt damit auch die Neigung der Sensoren S1 und S2 in den Neigungserfassungsebenen E3 und E4 zu.

Hinsichtlich der übrigen Merkmale und Auswertung der Signale der Sensoren wird vollinhaltlich auf die Ausführungen zu dem voranstehenden Ausführungsbeispiel Bezug genommen.

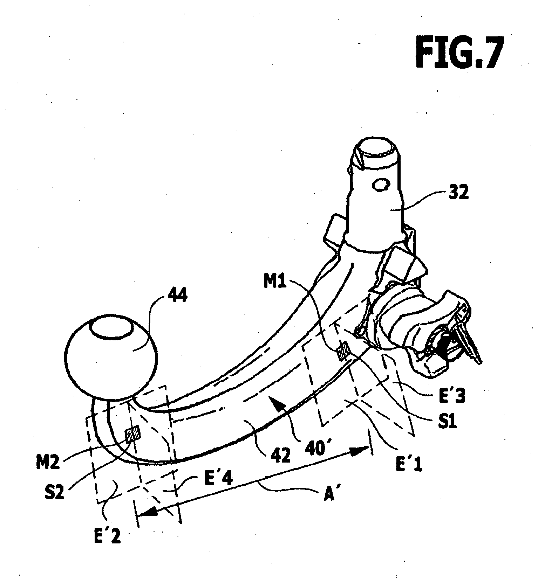

Alternativ oder ergänzend zum ersten oder zweiten Ausführungsbeispiel ist bei einem dritten Ausführungsbeispiel einer erfindungsgemäßen Trägervorrichtung 20, von welcher in Fig. 7 lediglich das Stützlastaufnahmeelement 40' dargestellt ist, vorgesehen, dass die Sensoren S1 und S2 am Kugelhals 42 unmittelbar angeordnet sind, wobei der Sensor S1 nahe dem Halteelement 32 angeordnet ist, während der Sensor S2 nahe der Kupplungskugel 44 angeordnet ist, so dass ein Abschnitt A des Kugelhalses 42 zwischen diesen liegt.

Ferner sind die Sensoren S1 und S2 so angeordnet, dass deren Neigungserfassungsebenen E'1 und E'2 im Wesentlichen parallel zueinander verlaufen, wobei diese Neigungserfassungsebenen E'1 und E'2 beispielsweise die XZ-Ebenen der beiden Sensoren S1 und S2 sein können.

Die Erfassung der der Stützlast entsprechenden Kraft SL erfolgt in gleicher Weise wie im Zusammenhang mit dem ersten Ausführungsbeispiel beschrieben, durch die Abweichung des Differenzwerts Dsl zwischen den von den Sensoren S1 und S2 in den Neigungserfassungsebenen E'1 und E'2 erfassten Neigungen von dem Differenzwert Dₒ der im unbelasteten Zustand von den Sensoren S1 und S2 in den Neigungserfassungsebenen E'1 und E'2 erfassten Neigungen.

Die Auswertung und Übermittlung kann dabei in ähnlicher Weise erfolgen, wobei der Abschnitt A' des Kugelhalses 42 ein anderes elastisches Verhalten als der Karosserieverbindungsträger 26 aufweist, so dass die Anzeige der Stützlast unter Berücksichtigung einer andersartigen Eichkurve für die Auswerteeinheit 50 erfolgt.

Zusätzlich besteht aber auch noch die Möglichkeit in YZ-Ebenen der Sensoren S1 und S2, die den senkrecht zu den Neigungserfassungsebenen E'1 und E'2 verlaufenden Neigungserfassungsebenen E'3 und E'4 in Fig. 6 entsprechen, die Neigung und somit auch die Neigungsdifferenzen zu erfassen, um beispielsweise eine Verdrehung des Abschnitts A' bei Einwirkung statischer oder dynamischer Kräfte Ql und Qr mit der Auswerteeinheit 50 zu erfassen.

Im Übrigen sind die im Zusammenhang mit dem dritten Ausführungsbeispiel nicht ausdrücklich erwähnten Teile in gleicher Weise ausgebildet wie die entsprechenden Teile des ersten Ausführungsbeispiels, so dass hinsichtlich der Beschreibung derselben vollinhaltlich auf die Ausführungen zum ersten Ausführungsbeispiel Bezug genommen werden kann.

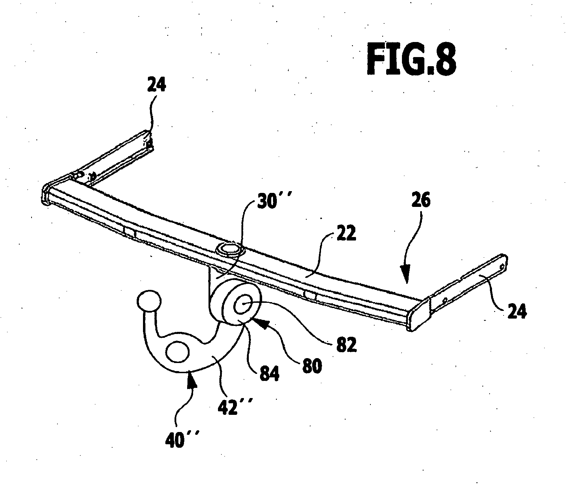

Bei einem vierten Ausführungsbeispiel, dargestellt in Fig. 8, ist der Karosserieverbindungsträger 26 bis auf die Aufnahme 30" in gleicher Weise ausgebildet wie beim ersten und zweiten Ausführungsbeispiel und auch in gleicher Weise an dem Heckbereich 14 der Fahrzeugkarosserie 12 des Kraftfahrzeugs 10 fixiert.

Im Gegensatz zum ersten Ausführungsbeispiel umfasst die Aufnahme 30' ein Schwenklager 80 für das Stützlastaufnahmeelement 40", wobei das Schwenklager 80 einen fahrzeugfesten Lagerkörper 82 aufweist, relativ zu welchem ein schwenkbarer Lagerkörper 84 bewegbar gelagert ist, wobei der schwenkbare Lagerkörper 84 beispielsweise um eine einzige Schwenkachse schwenkbar ausgebildet sein kann, wie beispielsweise in den Patentschriften EP 0 799 732 A und EP 1 142 732 A beschrieben, oder auch mehrachsig, im Extremfall dreiachsig, schwenkbar sein kann.

Das Schwenklager 80 ist ferner mit einer im Einzelnen nicht dargestellten, vorzugsweise in das Schwenklager 80 integrierten Verriegelungsvorrichtung 90 in mindestens einer Schwenkstellung verriegelbar, um beispielsweise in der in Fig. 8 dargestellten Arbeitsstellung das Stützlastaufnahmeelement 40" relativ zum Karosserieverbindungsträger 26 in einer definierten Stellung möglichst starr zu fixieren.

Auch bei dem vierten Ausführungsbeispiel können nur die Sensoren S1 und S2 so wie im Zusammenhang mit dem ersten Ausführungsbeispiel beschrieben, am Karosserieverbindungsträger 26 angeordnet sein.

Ergänzend oder alternativ dazu ist bei dem vierten Ausführungsbeispiel vorgesehen, dass die Sensoren S1 und S2 am Kugelhals 42" angeordnet sind, und zwar ebenfalls so, dass ein Abschnitt A" des Kugelhalses 42" sich zwischen den Sensoren S1 und S2 erstreckt.

Vorzugsweise sind dabei die Sensoren S1 und S2 in relativ zu einer Seitenkontur 92 des Kugelhalses 42' vertieften Bereichen 94 und 96 angeordnet, so dass die Sensoren S1 und S2 dadurch aufgrund der Seitenkontur 92 gegen Beschädigung geschützt sind.

Auch bei dem vierten Ausführungsbeispiel sind die Sensoren S1 und S2 so angeordnet, dass sie in der Lage sind, Bewegungen, insbesondere Neigungen in den Neigungserfassungsebenen E'1 und E'2 zu erfassen, in gleicher Weise wie dies im Zusammenhang mit dem dritten Ausführungsbeispiel beschrieben wurde, wobei bei Einwirken einer der Stützlast entsprechenden Kraft SL auf die Kupplungskugel 44 eine Deformation des Abschnitts A" des Kugelhalses 42" erfolgt, die ein Maß für die der Stützlast entsprechende Kraft SL auf die Kupplungskugel 44 darstellt und sich im Abweichen eines Differenzwertes Dsl der von den Sensoren S1 und S2 bei einwirkender Kraft SL in den Neigungserfassungsebenen E'1 und E'2 gemessenen Neigungen von dem Differenzwert Dₒ der ohne Stützlast von den Sensoren S1 und S2 in den Neigungserfassungsebenen E'1 und E'2 gemessenen Neigungen zeigt.

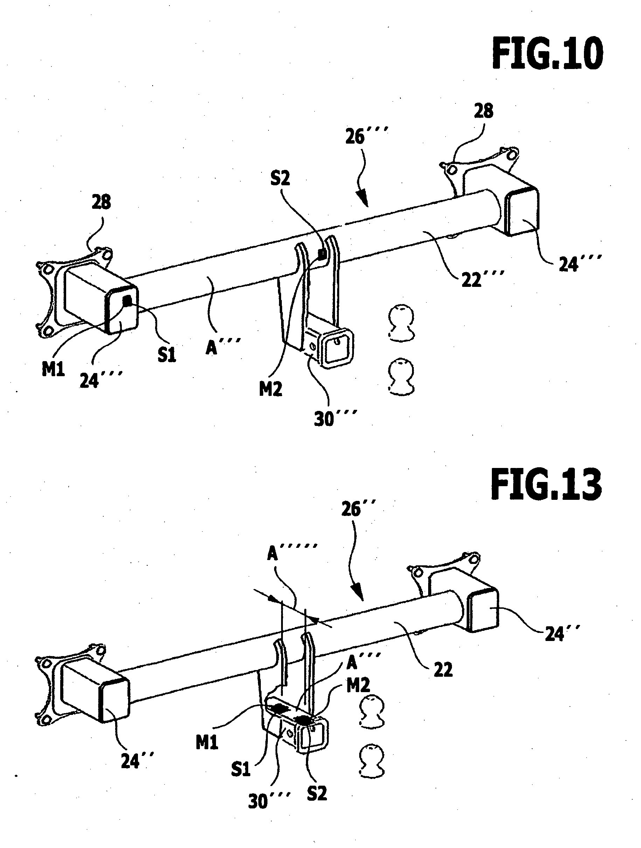

Bei einem fünften Ausführungsbeispiel einer erfindungsgemäßen Trägervorrichtung, dargestellt in Fig. 10, ist ebenfalls beim Karosserieverbindungsträger 26"' ein Querträger 22"' vorgesehen, welcher zwischen Seitenträgern 24"' gehalten ist, wobei die Seitenträger 24"' sich nicht längs Haltewänden des Heckbereichs 14 der Karosserie 12 erstrecken, sondern Montageflansche 28 aufweisen, die an entsprechenden Aufnahmen der Karosserie 14 anschraubbar sind.

Beim fünften Ausführungsbeispiel sind dabei die Sensoren S1 und S2 in gleicher Weise wie beim ersten Ausführungsbeispiel am Querträger 22'" angeordnet, und erfassen eine Torsion des Abschnitts A"' des Querträgers 22"' in gleicher Weise wie dies im Zusammenhang mit dem ersten Ausführungsbeispiel beschrieben wurde.

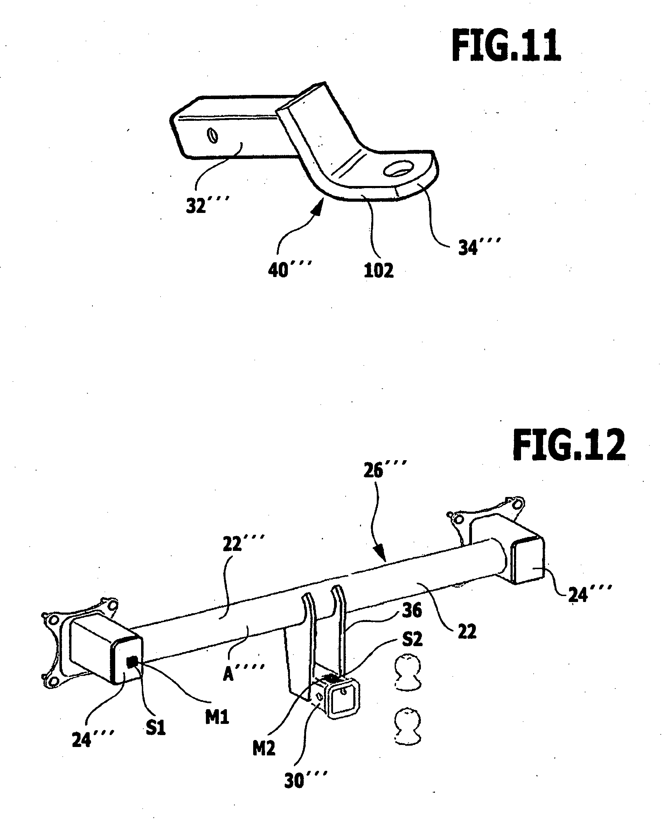

Im Gegensatz zum ersten Ausführungsbeispiel ist allerdings die Aufnahme 30" als Aufnahmehülse mit einer Vierkantaufnahme ausgebildet, in welche ein in Fig. 11 dargestelltes Halteelement 32"', beispielsweise ausgebildet als Vierkantrohr, einsteckbar und fixierbar ist, wobei das Halteelement 32'" Teil eines als Ganzes mit 40" bezeichneten Stützlastaufnahmeelements mit einem Stützlastträger 102 ist, an dessen dem Halteelement 32'" abgewandten Ende 34"' eine Kupplungskugel oder ein anderes Lastaufnahmeelement montierbar ist.

Die auf das Ende 34"' des Stützlastaufnahmeelements 40"' wirkende Stützlast führt in gleicher Weise wie im Zusammenhang mit dem ersten Ausführungsbeispiel beschrieben, zu einer Deformation des Querträgers 22"' im Bereich seines Abschnitts A"', welche durch die Sensoren S1 und S2 aufgrund festgestellter unterschiedlicher Neigungen in gleicher Weise wie im Zusammenhang mit dem ersten Ausführungsbeispiel beschrieben, erfasst werden kann. Bei einem sechsten Ausführungsbeispiel einer erfindungsgemäßen Trägervorrichtung 20, deren Karosserieträgerverbinder 26"' in Fig. 12 dargestellt ist, ist der zweite Sensor S2 nicht am Querträger 22 angeordnet, sondern an der Aufnahme 30"', die im Abstand vom Querträger 22"' angeordnet, jedoch starr mit diesem mittels Haltekörpern 36 verbunden ist, so dass der Abschnitt A"" zwischen dem Sensor S1 und dem Sensor S2 einen Teil des Querträgers 22"' sowie die Haltekörper 36 umfasst, die bei Einwirken einer der Stützlast entsprechenden Kraft SL deformiert werden und somit unterschiedlichen, von den Sensoren S1 und S2 gemessenen Neigungsdifferenzwerten Dₛₗ und Dₒ führen, die in gleicher Weise ausgewertet werden können, wie im Zusammenhang mit dem ersten Ausführungsbeispiel beschrieben.

Bei einem siebten Ausführungsbeispiel einer erfindungsgemäßen Trägervorrichtung, dargestellt in Fig. 13 sind die Sensoren S1 und S2 an der Aufnahme 30"' angeordnet und dienen somit dazu, Deformationen der Aufnahme 30"' aufgrund der Einwirkung der Stützlast zu erfassen, wobei in diesem Fall der Abschnitt A"" der Abstand durch den sich zwischen den Sensoren S1 und S2 erstreckenden Abschnitt der Aufnahme 30"' gebildet sind.

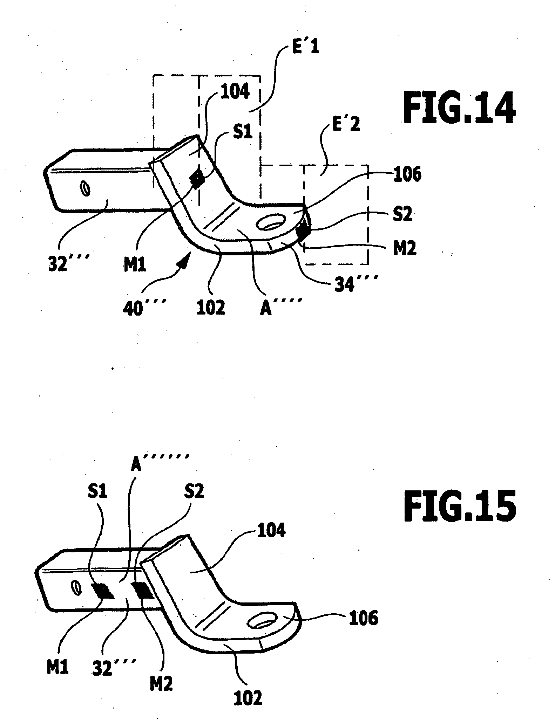

Alternativ zum Vorsehen der Sensoren S1 und S2 an dem jeweiligen Karosserieverbindungsträger 26"', wie im Zusammenhang mit dem fünften, sechsten und siebten Ausführungsbeispiel beschrieben, ist es bei einem achten Ausführungsbeispiel, dargestellt in Fig. 14, denkbar, die Sensoren S1 und S2 an dem Stützlastaufnahmeelement 40"' vorzusehen, wobei beispielsweise der Sensor S1 an einem an das Halteelement 32"' anschließenden Ende 104 eines Stützlastträgers 102 angeordnet ist, an dessen dem Ende 104 gegenüberliegenden Ende 106 der Sensor S2 angeordnet ist.

Beide Sensoren S1 und S2 erfassen dabei mindestens Bewegungen in den Neigungserfassungsebenen E'1 und E'2, die im Wesentlichen parallel zur Fahrzeuglängsmittelebene FL verlaufen, wobei die Auswertung der Sensorsignale in gleicher Weise wie im Zusammenhang mit dem ersten und zweiten Ausführungsbeispiel beschrieben, erfolgt.

Alternativ zum Vorsehen der Sensoren S1 und S2 an dem Stützlastenträger 102 besteht die Möglichkeit, wie in Fig. 15 im Zusammenhang mit einem neunten Ausführungsbeispiel der erfindungsgemäßen Trägervorrichtung dargestellt, die Sensoren S1 und S2 an dem in die Aufnahme 30"' einsteckbaren Halteelement 32"' anzuordnen, wobei in diesem Fall die Sensoren S1 und S2 Deformationen A""' des Halteelements 32" erfassen.

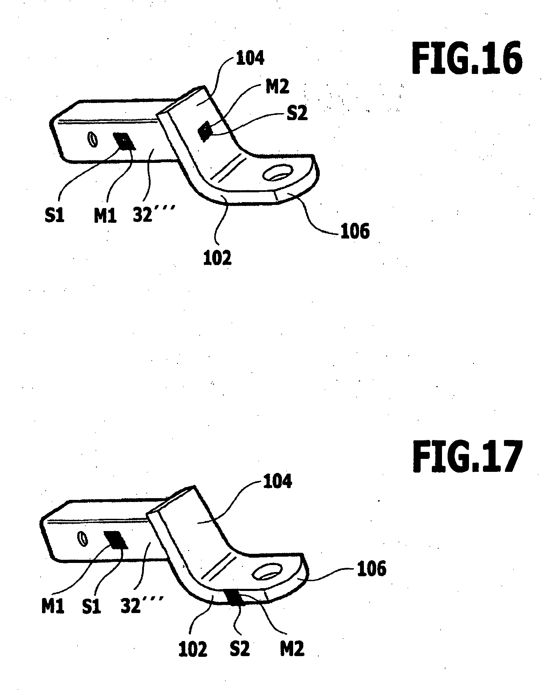

Bei einem zehnten Ausführungsbeispiel einer erfindungsgemäßen Trägervorrichtung, dargestellt in Fig. 16, sind die Sensoren S1 und S2 einmal am Halteelement 32"' angeordnet und einmal am Ende 104 des Stützlastträgers 102.

Bei einem elften Ausführungsbeispiel einer erfindungsgemäßen Trägervorrichtung, dargestellt in Fig. 17 sind die Sensoren S1 und S2 einmal am Halteelement 32"' und einmal Nahe des Endes 104 am Stützlastträger 102 angeordnet.

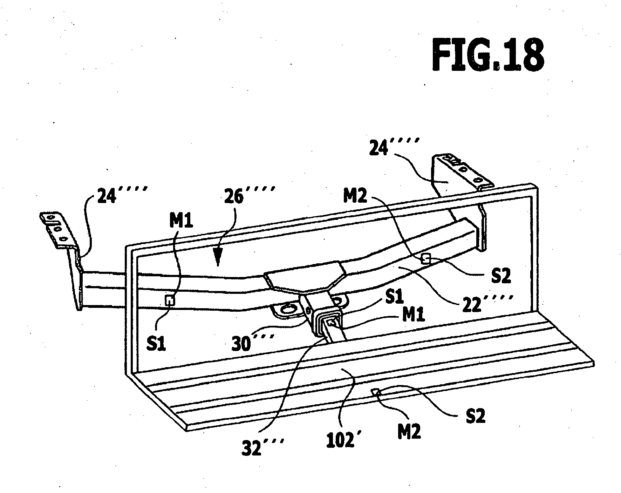

Bei einem zwölften Ausführungsbeispiel einer erfindungsgemäßen Trägervorrichtung, dargestellt in Fig. 18 ist der mit dem Halteelement 32"' verbundene Stützlastträger 102' als Hecklastenträger ausgebildet, wobei der Hecklastenträger beispielsweise zur Aufnahme von Fahrrädern dient und mit dem an diesem gehaltenen Halteelement 32'" in die Aufnahme 30"' einsteckbar ist, um den Hecklastenträger 102" an dem Karosserieverbindungsträger 26"" zu fixieren, wobei der Karosserieverbindungsträger 26"" seinerseits einen Querträger 22"" aufweist, der wiederum mit Seitenträgern 24"" mit der Karosserie des Kraftfahrzeugs verbindbar ist.

Bei diesem zwölften Ausführungsbeispiel sind die Sensoren S1 und S2 an den Montagearten M1 und M2 angeordnet, die den Montagearten des zweiten Ausführungsbeispiels gemäß Fig. 6 entsprechen. Es ist aber auch denkbar, die Sensoren S1 und S2 an all den Orten anzuordnen die im Zusammenhang mit dem ersten und dem vierten bis zehnten Ausführungsbeispiel erläutert wurden und die Auswerteeinheit 50 entsprechend auszubilden.

Im Übrigen wird auch bei diesem Ausführungsbeispiel auf die Ausführung zu den entsprechenden Teilen der voranstehenden Ausführungsbeispiele Bezug genommen.

## Patentansprüche

1. Trägervorrichtung (20) für Kraftfahrzeuge (10), welche zur Aufnahme von Lasten ausgebildet ist, welche mindestens an einem ersten Montageort (M1) mit einem ersten Sensor (S1) und an einem zweiten Montageort (M2) mit einem zweiten Sensor (S2) versehen ist, **dadurch gekennzeichnet, dass** der erste Sensor (S1) und der zweite Sensor (S2) Neigungssensoren sind, dass zwischen den Montageorten (M1, M2) ein Abschnitt (A) der Trägervorrichtung liegt, dessen lastbedingte Deformationen zumindest zum Teil durch die Neigungssensoren (S1, S2) erfasst werden, dass eine Auswerteeinheit (50) vorgesehen, ist, welche Messwerte der Sensoren (S1, S2) erfasst und aus diesen eine aufgenommene Last ermittelt, dass die Auswerteeinheit (50) zur Ermittlung der Last aus den Messwerten (N1, N2) Differenzwerte (D) bildet, und dass die Auswerteeinheit (50) zur Ermittlung der Last lastfreie Differenzwerte (D₀) mit lastbehafteten Differenzwerten (Dₛₗ) vergleicht.

2. Trägervorrichtung nach Anspruch 1, **dadurch gekennzeichnet, dass** der Abschnitt (A) der Trägervorrichtung (20) ein einstückiger Abschnitt ist.

3. Trägervorrichtung nach Anspruch 1, **dadurch gekennzeichnet, dass** der Abschnitt (A) der Trägervorrichtung (20) durch spielfreie Verbindungen miteinander verbundene Teile umfasst.

4. Trägervorrichtung nach Anspruch 3, **dadurch gekennzeichnet, dass** die spielfreien Verbindungen stoffschlüssige Verbindungen sind.

5. Trägervorrichtung nach einem der voranstehenden Ansprüche, **dadurch gekennzeichnet, dass** die lastbedingten Deformationen in Bezug auf im Wesentlichen zueinander parallele Erfassungsebenen (E1, E2; E3, E4) der Sensoren (S1, S2) erfasst werden.

6. Trägervorrichtung nach Anspruch 5, **dadurch gekennzeichnet, dass** die Erfassungsebenen (E1, E2; E3, E4) im Wesentlichen parallel zu zwei durch einen Aufbau der Sensoren (S1, S2) vorgegebenen Messrichtungen (X, Y, Z) der Sensoren (S1, S2) verlaufen.

7. Trägervorrichtung nach einem der voranstehenden Ansprüche, **dadurch gekennzeichnet, dass** die Auswerteeinheit (50) aus der Abweichung der lastbehafteten Differenzwerte (Dₛₗ) von einem lastfreien Differenzwert (D₀) ein Maß für die Last ermittelt.

8. Trägervorrichtung nach einem der voranstehenden Ansprüche, **dadurch gekennzeichnet, dass** die Auswerteeinheit (50) die Zulässigkeit der Last durch Vergleich mit mindestens einem in der Auswerteeinheit (50) vorgegebenen Referenzwert auswertet.

9. Trägervorrichtung nach Anspruch 8, **dadurch gekennzeichnet, dass** die Auswerteeinheit (50) mit einer Anzeigeeinheit (60) gekoppelt ist, welche die Zulässigkeit der Last anzeigt.

10. Trägervorrichtung nach einem der voranstehenden Ansprüche, **dadurch gekennzeichnet, dass** die Auswerteeinheit (50) mit mindestens einem der Sensoren (S1, S2) Beschleunigungen erfasst.

11. Trägervorrichtung nach einem der voranstehenden Ansprüche, **dadurch gekennzeichnet, dass** die Trägervorrichtung (20) einen heckseitig an der Karosserie (12) angeordneten Karosserieverbindungsträger (26) und einen vom Karosserieverbindungsträger (26) gehaltenes Stützlastaufnahmeelement (40) umfasst.

12. Trägervorrichtung nach Anspruch 11, **dadurch gekennzeichnet, dass** der erste und der zweite Montageort (M1, M2) an dem Karosserieverbindungsträger (26) angeordnet sind.

13. Trägervorrichtung nach Anspruch 11 oder 12, **dadurch gekennzeichnet, dass** der erste und der zweite Montageort (M1, M2) an dem Stützlastaufnahmeelement (40) angeordnet sind.

## Claims

1. Carrier device (20) for motor vehicles (10) designed to support loads and being provided at least with a first sensor (S1) at a first installation point (M1) and with a second sensor (S2) at a second installation point (M2),
**characterized in that** the first sensor (S1) and the second sensor (S2) are tilt sensors, that a section (A) of the carrier device is located between the two installation points (M1, M2), the deformations of said section caused by a load being detected by the tilt sensors (S1, S2) at least in part, that an evaluation unit (50) is provided for recording measurement values of the sensors (S1, S2) and determining a borne load from them, that the evaluation unit (50) forms differential values (D) from the measurement values (N1, N2) for determining the load and that the evaluation unit (50) compares load-free differential values (Dₒ) with differential values (Dₛₗ) caused by a load for determining the load.

2. Carrier device as defined in claim 1, **characterized in that** the section (A) of the carrier device (20) is a one-piece section.

3. Carrier device as defined in claim 1, **characterized in that** the section (A) of the carrier device (20) comprises parts connected to one another by clearance-free connections.

4. Carrier device as defined in claim 3, **characterized in that** the clearance-free connections are materially joined connections.

5. Carrier device as defined in any one of the preceding claims, **characterized in that** the deformations caused by a load are detected with reference to planes of detection (E1, E2; E3, E4) of the sensors (S1, S2), said planes being essentially parallel to one another.

6. Carrier device as defined in claim 5, **characterized in that** the planes of detection (E1, E2; E3, E4) extend essentially parallel to two directions of measurement (X, Y, Z) of the sensors (S1, S2) predetermined by a construction of the sensors (S1, S2).

7. Carrier device as defined in any one of the preceding claims, **characterized in that** the evaluation unit (50) determines a measurement for the load from the deviation of the differential values (Dₛₗ) caused by a load from a load-free differential value (D_{O}).

8. Carrier device as defined in any one of the preceding claims, **characterized in that** the evaluation unit (50) evaluates the admissibility of the load by way of comparison with at least one reference value predetermined in the evaluation unit (50).

9. Carrier device as defined in claim 8, **characterized in that** the evaluation unit (50) is coupled to a display unit (60) displaying the admissibility of the load.

10. Carrier device as defined in any one of the preceding claims, **characterized in that** the evaluation unit (50) records accelerations with at least one of the sensors (S1, S2).

11. Carrier device as defined in any one of the preceding claims, **characterized in that** the carrier device (20) comprises a body connection support (26) arranged on the body (12) at the rear end and a bearing load receiving element (40) held by the body connection support (26).

12. Carrier device as defined in 11, **characterized in that** the first and the second installation points (M1, M2) are arranged on the body connection support (26).

13. Carrier device as defined in claim 11 or 12, **characterized in that** the first and the second installation points (M1, M2) are arranged on the bearing load receiving element (40).

## Revendications

1. Dispositif support (20) pour véhicules automobiles (10), conçu pour recevoir des charges, doté, au moins sur un premier site de montage (M1), d'un premier capteur (S1) et, sur un deuxième site de montage (M2), d'un deuxième capteur (S2), **caractérisé en ce que** le premier capteur (S1) et le deuxième capteur (S3) sont des capteurs d'inclinaison, **en ce qu'**entre les sites de montage (M1, M2), se trouve un tronçon (A) du dispositif support dont les déformations dues à la charge sont détectées, au moins en partie, par les capteurs d'inclinaison (S1, S2), **en ce qu'**un module d'analyse (50) est prévu, lequel détecte des valeurs mesurées des capteurs (S1, S2) et détermine une charge reçue à partir de ces valeurs, **en ce que** le module d'analyse (50) calcule des valeurs différentielles (D) à partir des valeurs mesurées (N1, N2) pour déterminer la charge, et **en ce que** le module d'analyse (50) compare des valeurs différentielles sans charge (D_{O}) à des valeurs différentielles en charge (Dₛₗ) pour déterminer la charge.

2. Dispositif support selon la revendication 1, **caractérisé en ce que** le tronçon (A) du dispositif support (20) est un tronçon d'un seul tenant.

3. Dispositif support selon la revendication 1, **caractérisé en ce que** le tronçon (A) du dispositif support (20) comprend des parties reliées entre elles par des liaisons sans jeu.

4. Dispositif support selon la revendication 3, **caractérisé en ce que** les liaisons sans jeu sont des liaisons par liaison de matières.

5. Dispositif support selon l'une quelconque des revendications précédentes, **caractérisé en ce que** les déformations dues à la charge sont détectées par rapport à des plans de détection (E1, E2 ; E3, E4) des capteurs (S1, S2) essentiellement parallèles entre eux.

6. Dispositif support selon la revendication 5, **caractérisé en ce que** les plans de détection (E1, E2 ; E3, E4) sont essentiellement parallèles à deux directions de mesure (X, Y, Z) des capteurs (S1, S2) prédéfinies par un montage des capteurs (S1, S2).

7. Dispositif support selon l'une quelconque des revendications précédentes, **caractérisé en ce que** le module d'analyse (50) détermine une mesure de la charge à partir de l'écart entre les valeurs différentielles en charge (Dₛₗ) et une valeur différentielle sans charge (D_{O}).

8. Dispositif support selon l'une quelconque des revendications précédentes, **caractérisé en ce que** le module d'analyse (50) analyse la fiabilité de la charge en la comparant au moins à une valeur de référence prédéfinie dans le module d'analyse (50).

9. Dispositif support selon la revendication 8, **caractérisé en ce que** module d'analyse (50) est couplé à un module d'affichage (60) qui affiche la fiabilité de la charge.

10. Dispositif support selon l'une quelconque des revendications précédentes, **caractérisé en ce que** le module d'analyse (50) détecte des accélérations avec au moins un des capteurs (S1, S2).

11. Dispositif support selon l'une quelconque des revendications précédentes, **caractérisé en ce que** le dispositif support (20) comprend un support de liaison de la carrosserie (26) disposé à l'arrière sur la carrosserie (12) et un élément de réception d'une charge d'appui (40) maintenu par le support de liaison de la carrosserie (26).

12. Dispositif support selon la revendication 11, **caractérisé en ce que** le premier et le deuxième site de montage (M1, M2) sont disposés sur le support de liaison de la carrosserie (26).

13. Dispositif support selon l'une quelconque des revendications 11 ou 12, **caractérisé en ce que** le premier et le deuxième site de montage (M1, M2) sont disposés sur l'élément de réception d'une charge d'appui (40).
